**Europäisches Patentamt**

**European Patent Office**

**Office européen des brevets**

(11) Publication number: **0 086 421**
**B1**

# EUROPEAN PATENT SPECIFICATION

(45) Date of publication of patent specification: **20.04.88**

(51) Int. Cl.⁴: **G 01 N 30/30**

(21) Application number: **83101108.5**

(22) Date of filing: **06.02.83**

(54) A chamber for chromatographic analyses.

(30) Priority: **17.02.82 IT 4781882**

(43) Date of publication of application:
**24.08.83 Bulletin 83/34**

(45) Publication of the grant of the patent:
**20.04.88 Bulletin 88/16**

(84) Designated Contracting States:
**AT BE CH DE FR GB LI NL SE**

(56) References cited:
**EP-A-0 023 827**
**DE-A-2 947 124**
**FR-A-2 380 698**
**GB-A-2 054 833**
**US-A-4 181 613**

(73) Proprietor: **CARLO ERBA STRUMENTAZIONE S.p.A.**
**I-20090 Rodano Milano (IT)**

(72) Inventor: **Sisti, Giorgio**
**7, P.za S. Agostino**
**Milan (IT)**
Inventor: **Tosi, Bruno**
**4, via Custoza**
**Carate Brianza (Milan) (IT)**
Inventor: **Ostan, Giovanni**
**20, via Ruggero di Lauria**
**Milan (IT)**
Inventor: **Munari, Fausto**
**147, via Padova**
**Milan (IT)**
Inventor: **Riva, Ermete**
**36, via Lunga**
**Merate (Como) (IT)**
Inventor: **Trestianu, Sorin**
**7, Place de la Petite Suisse**
**Bruxelles (BE)**

(74) Representative: **Marietti, Giuseppe**
**CENTRO DI CONSULENZA IN PROPRIETA'**
**INDUSTRIALE Viale Caldara, 43**
**I-20122 Milano (IT)**

Courier Press, Leamington Spa, England.

## Description

This invention concerns a chamber for chromatographic analyses, in which temperature conditions as necessary for the analytical use of packed or capillary chromatographic columns are obtained, said chamber being particularly suitable for use with thin-walled columns, such as fused silica columns. Said chamber comprises in a known way, a thermally insulated space which can be sealed towards the outside, said space housing means for air heating and at least a fan for air circulation inside the closed space.

Chambers of the above defined type are already known and used, in particular chambers in which the fan is of the type with axial or axial-radial suction and with radial delivery, and it is mounted near a chamber inner wall, behind a screen having a central opening to allow air to reach the fan, as well as edges spaced from the other internal walls of the chamber to create passage for the air flow, beyond the screen, towards the column. The heating means, generally consisting of electrical resistors, are positioned in said known chambers, coaxially to the fan, with a suitable distribution, in general a uniform distribution, on the outside of the fan itself. In this way, a circulation inside the airtight space defined by the chamber is created, starting from the suction area of the fan, in correspondence with the central opening of the screen, passing through the fan, where the fluid threads are accelerated to be sent in contact with the electrical resistors, and finally reaching the space occupied by the chromatographic column(s) beyond the edges of the screen.

In particular, US—A—4.181.613 shows a chamber for chromatographic analysis which comprises a space which can be sealed towards the outside, and in which means for air heating and a fan for air circulation are housed and where said heating means are positioned on the delivery side of the fan. The fan is of the type with axial or axial-radial suction and radial delivery and is mounted near a first internal wall of the chamber, behind a screen having a central opening for feeding air to the fan, the heating means being in the form of a heater wire (electrical resistor) which is directly or indirectly supported by the screen and distributed coaxially to the fan.

This known solution has shown problems specially using thin-wall capillary columns, such as fused silica columns, which have the inconvenience of an extremely reduced thermal inertia and therfore a very high sensitivity to temperature changes, namely to quick local and time variations versus nominal values. In fact it has been noticed that the analytical results sometimes are not correct (distorted or divided peaks) due to the fact that the temperature in a point whatever of the column undergoes rapid changes in time versus its nominal temperature.

This is due to a not perfect mixing of the threads of cold and hot air, which lap the column in a casual way. The temperature variation in different points of the column produces, in the case of thin-walled capillary columns, an almost instant variation in the distribution of the component within the mobile and the stationary phase, in the mentioned points. As a result, a distortion of the peak occurs and such distortion, specially in the end section of the column, can no longer be eliminated or attenuated by the remaining stationary phase. The peak remains distorted or even divided until it enters the detector.

An object of the present invention is to overcome this drawback by a chamber for chromatographic analyses in which the internal space, in particular during heating, when said space is sealed towards the outside, maintains the maximum temperature uniformity and in particular stability in correspondence with the area where the chromatographic column is positioned.

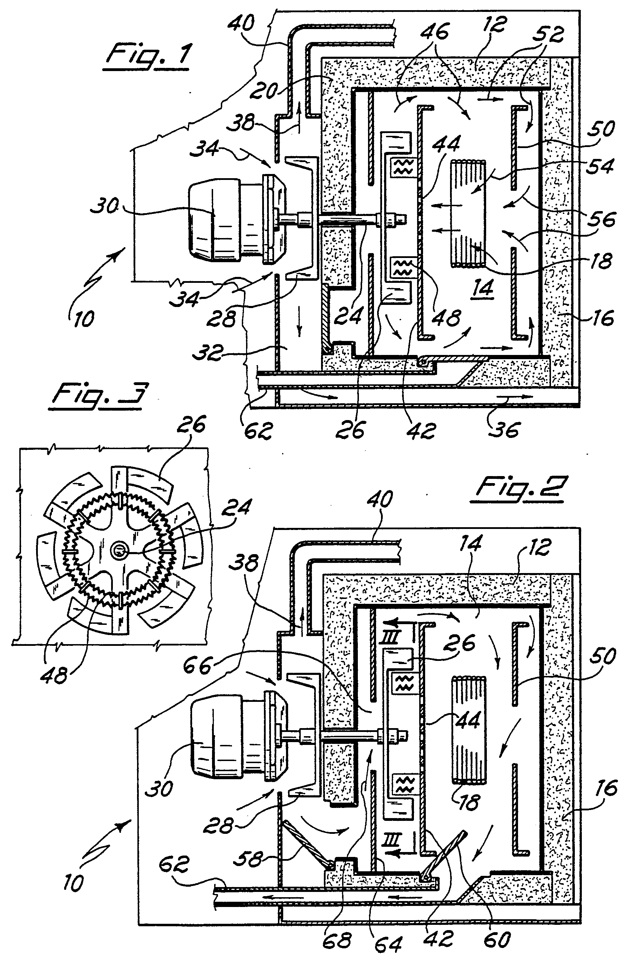

GB—A—2.054.833 shows a cooking oven wherein an auxiliary heating element is placed behind an oven wall on the suction side of the fan (embodiments of figs. 2 to 5), together with a turbine fan. The embodiment of fig. 6 uses a cup-like fan, but in connection with a heater placed downstream the fan. The reason of the use of a turbine fan in the embodiment of figs. 2 to 5 is that this fan creates an air flow at very high speed, sufficient to ensure that the electric auxiliary heater, which is housed in a reduced space, does not burn. On the contrary, the embodiment of fig. 6 shows an electric resistance housed in a large space, so that the air flow can have a lesser speed, as obtained by a cup-shaped fan. This document relates to a different field than that of chromatographic analyses and moreover does not suggest at all the use of a cup-shaped fan in connection with a heater housed within the fan cup.

The suggestion of GB—A—2.054.833, in order to obtain a more uniform temperature distribution within the oven is to avoid a clearance between the oven wall and the fan, in which air could directly leak from inlet to outlet openings in said wall, without passing over the auxiliary heater. This is obtained both by placing an auxiliary heater or by closing such clearance.

Then the use of a cup-shaped fan in GB—A—2.054.833 with the heater therein would not be possible for the described reasons.

It is to be noted that none of the cited references teaches to have the column space heated by air which is first heated, then mixed by the fan and then sent to said column housing space. On the other hand, the heater must be shrouded in such a manner as to avoid direct radiation on the column. Acordingly the invention relates to a chamber for chromatographic analysis, adapted to control the temperature conditions of packed or capillary columns housed within said chamber, in a space which can be sealed toward the outside, said space having therein a fan of the type with axial or axial-radial suction and radial delivery, a screen dividing the said space into two portions, respectively housing said fan and said column(s), said screen having a central opening therein for feeding air to the fan and side openings for discharging the air to the column housing space portion, said screen supporting heating means in the form of electrical resistors co-axial to the fan, which are placed in the space portion housing the fan and behind said screen so that the column(s) are shrouded therefrom, characterized in that said fan has a cup-like configuration open toward the screen, in that said electrical resistors are housed inside said cup configuration, upstream the fan with reference to the air path from said screen central opening to said screen side openings. If the column is of the thin-walled type, it is advantageously supported inside the space defined by the chamber so as to be helicoidally wound in a coaxial way with respect to the fan and in such a way that said column having a winding diameter larger than the diameter of said screen central opening. In this way, the air circulated by the fan passes beyond the edges of the screen and covers all the space where the column is placed, hitting the latter, passing through it and then coming back in axial direction towards the fan, which is reached after the air has passed through the zone of the resistors, wherein it is heated.

To avoid negative consequences on temperature stability due to the effect of the walls, it is advisable to foresee a second screen placed parallely to the former one, opposite thereto with respect to the column and having edges spaced from the chamber internal walls to create passages for letting air pass behind the same, as well as a central opening axially aligned with said central opening of said first screen, so that the fluid threads lapping the walls of the closed space and in this way undergoing cooling with respect to the main current which hits the column, are sent behind this second screen and put again in circulation through the central opening of the latter, without thermally affecting the column.

A preferred embodiment of the invention is shown in the enclosed drawing, wherein:

— Figure 1 is a schematic cross view of a chromatographic chamber according to the invention under heating conditions.

— Figure 2 is a schematic view, corresponding to that of figure 1, of the same chromatographic chamber under cooling conditions or conditions of temperature maintenance.

— Figure 3 is a schematic front view of the fan and of the heating resistors in the chamber of figures 1 and 2, according to the cross sectional line III—III of figure 2.

Referring to the drawing, the illustrated chamber comprises an external envelope 10 in which thermally insulating elements 12 are positioned which define in their inside a space 14 which can be sealed by means of a door 16, through which it is possible to reach said space for any operation to be performed on the capillary column 18, which is supported in a way known in itself in said space 14 and is helicoidally wound, as illustrated. Though it can be used also with other types of column, the chamber now illustrated has been studied particularly to be used with thin-walled columns, such as fused silica columns, having very reduced thermal inertia, which are placed coaxially to the fans, as illustrated.

The insulated wall 20 opposite to the door 16 is crossed by a shaft 24 which bears a fan 26 mounted inside the space 14 which can be airtightly closed, as well as another fan 28 placed outside the space and the insulated walls, said shaft 24 being actuated, together with fans 26 and 28, by a motor 30. The external fan 28 works in a chamber 32 provided with openings to let air enter from the outside as indicated by arrows 34, said fan sending air in 36 until it reaches the internal surface of the envelope 10, in order to ensure that the latter does not reach temperatures dangerous for the operator who touches the equipment. Simultaneously, the fan 28 sends air in 38 through a duct 40 which feeds other possible devices connected to the equipment, in particular it performs the external cooling of a device for column direct injection.

The fan 26, mounted inside the closed space 14, is placed behind a screen 42 which extends perpendicularly to the axis 24 of the fan and parallel to the insulated wall 20 and which presents a central opening 44, eventually protected by a grating, for axial inlet of the air which is circulated inside the space 14 by the fan 26. On the top side, the edges of screen 42 are spaced from the other walls of the space 14 to allow the air flow delivered by the fan 26 to pass beyond the screen 42, as indicated by arrows 46.

Behind the screen 42 and in the middle of fan 26, heating means are positioned, in the form of resistors 48 suitably distributed circumferentially with respect to the axis of fan 26. As shown in the drawing, the resistors 48 are placed on the suction side of fan 26. Therefore, the fluid threads coming from opening 44 in axial direction are radially deviated and pass through the area of the resistors 48, heating themselves in a way that, considering the space distribution of said resistors 48, is not necessarily uniform. However, the subsequent passage through the blades of fan 26 makes the temperature of the fluid threads completely uniform, creating a current which in all points has a constant temperature and which is sent behind the edges of the screen 42 until it reaches the walls of the column 18, then coming back to the opening 44 of the screen 42, for instance through the central opening of the column 18. The diameter of the latter, when it is placed as in the figures, is advantageously larger than or equal to the diameter or to the maximum size of the opening 44 of screen 42, so as to create a uniform circulation as above indicated.

In order to avoid that the fluid threads, which belong to the air flow sent by the fan 26 and come in contact with the internal walls of the space 14 undergoing temperature variations, in particular cooling due to said contact, negatively affect the performance of the chromatographic column 18, the invention proposes a second screen 50 placed in front of the first screen 42, in a position opposite to the column 18 and therefore in this case mounted on the door 16. This second screen 50 essentially shows the same configuration as the first screen, in a way that said fluid threads, undergoing temperatue variations, are conveyed as indicated by arrows 52 towards the screen 50 and deviated by the latter to be then put again in circulation through the central opening 54 of the screen 50, as indicated by arrows 56. Considering the reciprocal position of the openings 54 and 44 in the screens and of the column 18 respectively, it can be clearly seen that these fluid threads, which follow arrows 52 and 56, are again circulated through the opening 44 in the screen 42, without touching the column 18 and therefore without affecting the temperature conditions of the latter, in particular when it is positioned as in the figure and when the diameter of the opening 54 is smaller than the winding diameter of the column.

To cool the space 14 where the column 18 is housed, air locks 58 and 60 respectively are foreseen, the first one of which communicates with the space 32 in which the external fan 28 works, while the air lock 60 opens on a duct 62 for air outlet towards outside. Moreover, between the wall 20 and the fan 26, there is a third screen 64 which separates the space 14 from the back wall 20, except for an opening 66 provided in said screen through which the air emitted by the fan 28 can be conveyed axially to the fan 26, as indicated by arrows 68, obviously when the air lock 58 is open. The air coming from outside and sent to the space 14 through the fan 28 is then distributed in said volume 14 by the fan 26 which then discharges said air flow through the air lock 60. To keep the thermal conditions of the chamber at constant temperature values, it is also possible to choke the opening of air locks 58, 60, keeping resistors 48 connected. Also in this case it has been noticed that the uniformity of distribution and the stability of temperatures in correspondence with the column 18 are always satisfactory.

**Claims**

1. A chamber for chromatographic analysis, adapted to control the temperature conditions of packed or capillary columns (18) housed within said chamber, in a space (14) which can be sealed toward the outside, said space (14) having therein a fan (26) of the type with axial or axial-radial suction and radial delivery, a screen (42) dividing the said space (14) into two portions, respectively housing said fan (26) and said column(s) (18), said screen having a central opening (44) therein for feeding air to the fan (26) and side openings for discharging the air to the column housing space portion, said screen supporting heating means (48) in the form of electrical resistors co-axial to the fan (26), which are placed in the space portion housing the fan and behind said screen (42), so that the column(s) are shrouded therefrom, characterized in that said fan (26) has a cup-like configuration open toward the screen (42), in that said electrical resistors (48) are housed inside said cup configuration, upstream the fan with reference to the air path from said screen central opening (44) to said screen side openings.

2. A chromatographic chamber according to claim 1, characterized in that the column is a helicoidally wound thin-wall capillary column (18) in a coaxial position with respect to the fan, and in that said column (18) has a winding diameter larger than the diameter of said central opening (44).

3. A chromatographic chamber according to claim 1, characterized in that air locks (58, 60) are provided to put said chamber in communication with the outside and wherein a second fan (28) is mounted coaxially to the first one, outside of the chamber space portion housing said first fan (26), and in that at least one (58) of said air locks is positioned to control the pneumatic connection between said first fan housing portion and a chamber (32) open to the atmosphere and housing said second fan (28), and in that said first air lock (58) comprises a flap to convey air, coming from said air lock, axially to the first fan (26).

4. A chromatographic chamber according to claim 1, characterized in that a second screen (50) is placed therein parallel to said first screen (42) and opposite thereto with respect to the column (18), said second screen having edges spaced from the chamber internal walls to create passages for letting air pass behind the same, as well as a central opening axially aligned with said central opening (44) of said first screen (42).

5. A chromatographic chamber according to claim 4, characterized in that the maximum size of the central opening of said second screen (50) is smaller than the winding diameter of the column (18).

**Patentansprüche**

1. Kammerofen für gaschromatographische Analyse, geeignet zur Temperaturkontrolle von gefüllten Säulen oder Kapillarsäulen (18), die im genannten Kammerofen untergebracht sind, und zwar in einem Raum (14), der nach außen dicht verschließen werden kann, und im genannten Raum (14) ein Flügelrad (26) vorgesehen ist, das einen axialen oder axial radialen Lufteinlaß und eine radiale Verteilung bewirkt, und ein Schirm (42) vorgesehen ist, der den genannten Raum (14) in zwei Teile — und zwar einen Aufnahmebereich für das genannte Flügelrad (26) und einen für die genannten Säulen (18) — aufteilt, und der genannte Schirm hat eine Mittelöffnung (44), die dem Flügelrad (26) einen Luftstrom versorgt, und Seitenöffnungen zur Förderung des Luftstromes in den Aufnahmebereich für die Säule hinein, und am genannten Schirm sind Heizelemente (48) in Form von elektrischen Widerständen in koaxialer Lage zum Flügelrad (26) angeordnet, die im Aufnahmebereich für das Flügelrad untergebracht und hinter dem genannten Schirm (42) sind, sodaß die Säulen davon geschützt sind,

7 0 086 421 8

dadurch gekennzeichnet, daß des genannte Flügelrad (26) schalenförmig ist, und seine Öffnung nach dem Schirm (42) gerichtet ist, dadurch, daß die genannten elektrischen Widerstände (48) im genannten schalenförmigen Offnung untergebracht sind, stromaufwärts vom Flügelrad, in Bezug auf den Luftstrom von der genannten Mittelöffnung des Schirms (44) zu dessen genannten Seitenöffnungen.

2. Gaschromatographischer Kammerofen nach dem Anspruch 1, dadurch gekennzeichnet, daß die Säule eine mit schraubenartig gedrehter dünner Wand Kapillarsäule (18) ist, die in einer koaxialen Lage zum Flügelrad angeordnet ist, und dadurch, daß die genannte Säule (18) einen Spiraldurchmesser aufweist, der größer als der Durchmesser der genannten Mittelöffnung (44) ist.

3. Gaschromatographischer Kammerofen nach dem Anspruch 1, dadurch gekennzeichnet, daß darin Lüftungsklappen (58, 60) zur Verbindung des genannten Kammerofens nach außer hin vorgesehen sind, und dadurch, daß darin ein zweites Flügelrad (28) im koaxialer Lage zum ersten, außerhalb des Aufnahmebereich im Kammerofen für das este Flügelrad (26) eingebaut ist, und dadurch, daß wenigstens eine (58) von den genannten Lüftungsklappen in einer geeigneten Lage zur Kontrolle von der pneumatischen Verbindung zwischen dem Aufnahmebereich für des erste genannte Flugelrad und einem Kammerofen (32) angeordnet ist, der nach außen hin geöffnet ist, und in dem das genannte zweite Flügelrad (28) unterbracht ist, und dadurch, daß die genannte este Lüftungsklappe (58) ein Ventil zur axialen Verteilung des Luftstromes von der genannten Lüftungsklappe zum ersten Flügelrad (26) aufweist.

4. Gaschromatographischer Kammerofen nach dem Anspruch 1, dadurch gekennzeichnet, daß darin ein zweiter Schirm (50) in einer zum genannten ersten Schirm (42) parallelen Lage angeordnet ist, und der deshalb der Säule (18) gegenüber liegt, und dadurch, daß dieser zweite Schirm Ränder hat, die in einem solchen Abstand von den Innenwänden des Kammerofens sind, daß ein Luftübergang hinter damselben ermöglicht wird, sowie eine Mittelöffnung, die einer axialen Lage zur genannten Mittelöffnung (44) des genannten ersten Schirms (42) angeordnet ist.

5. Gaschromatographischer Kammerofen nach dem Anspruch 4, dadurch gekennzeichnet, daß der maximale Durchschnitt von der Mittelöffnung des genannten zweiten Schirms (50) kleiner ist, als der Spiraldurchmesser von der genannten Säule (18).

**Revendications**

1. Chambre pour analyse chromatographique, apte au contrôle des conditions de temperature de colonnes à remplissage ou capillaires (18) qui sont disposées à l'intérieur de ladite chambre, dans un espace (14) qui peut être fermé de facon étanche vers l'extérieur, ledit espace (14) logeant un ventilateur (26) du type à aspiration axiale ou axiale-radiale et envoi radial, un écran (42) qui divise ledit espace en deux parties respectivement logeant ledit ventilateur (26) et ladite colonne ou colonnes (18), ledit écran ayant une ouverture centrale (44) pour l'alimentation d'air au ventilateur (26), aussi bien que des ouvertures laterales pour décharger l'air dans la partie d'espace logeant la ou les colonnes, ledit écran soutenant des moyens de chauffage (48) dans la forme de résistances électriques co-axiales au ventilateur, qui sont placées dans la partie d'espace logeant le ventilateur et derrière ledit écran (42) de facon que la colonne ou les colonnes sont masquées à l'égard d'elles, caractérisée en ce que ledit ventilateur (26) a una configuration à coupe ouverte vers l'écran (42), en ce que lesdites résistances électriques sont logées à l'interieur de ladite configuration à coupe, en amont du ventilateur par rapport au parcours de l'air de ladite ouverture centrale (44) de lécran jusqu'aux dites ouvertures laterales de l'écran.

2. Chambre de chromatographie selon la revendication 1, caractérisée en ce que la colonne est une colonne capillaire (18) à parois mince, euroulée en hélice dans une position co-axiale par rapport au ventilateur, et en ce que ladite colonne (18) a un diamètre de son enroulement qui est plus grand du diamètre de ladite ouverture centrale (44).

3. Chambre de chromatographie selon la revendication 1, caractérisée en ce que des soupapes (58, 60) pour l'air sont prévues pour mettre ladite chambre en communication avec l'extérieur, et en ce qu'un déuxième ventilateur (28) est installé co-axialement au prémier, à l'extérieur de la partie d'espace logeant ledit prémier ventilateur (26), et en ce qu'au moins une (58) desdites soupapes pour l'air est placée pour controler la connexion pneumatique entre ladite partie logeant le prémier ventilateur et une chambre (32) ouverte vers l'atmosphère et logeant ledit déuxième ventilateur (28), et en ce que ladite première soupape (58) pour l'air comprend un volet pour convoyer l'air, en provenance de ladite soupape, axialement au prémier ventilateur (26).

4. Chambre de chromatographie selon la revendication 1, caractérisée en ce qu'un déuxième écran (50) est placé dans la même parallèlement audit prémier écran (42) et sur l'autre côté de la chambre par rapport à la colonne (18), ledit deuxième écran ayant des bords qui sont distancés des parois intérieures de la chambre, pour former des passages qui permettent à l'air d'écouler derrière lui, aussi bien qu'une ouverture centrale axialement alignée avec ladite ouverture centrale (44) dudit premier écran (42).

5. Chambre de chromatographie selon la revendication 4, caractérisée en ce que la dimension la plus grande de l'ouverture centrale dudit deuxième écran (50) est plus petite du diamètre d'enroulement de la colonne (18).

0 086 421

*Fig. 1*

*Fig. 3*

*Fig. 2*

1